# EUROPÄISCHE PATENTSCHRIFT

(11) **EP 4 313 632 B1**
(45) Veröffentlichungstag und Bekanntmachung des Hinweises auf die Patenterteilung: **22.01.2025**
(21) Anmeldenummer: 21823757.6
(22) Anmeldetag: 29.11.2021
(51) Int. Cl.: B60C 11/13, B60C 11/04, B60C 11/03

(54) **FAHRZEUGLUFTREIFEN**
PNEUMATIC TYRE FOR A VEHICLE
PNEU DE VÉHICULE

(30) Priorität: 25.03.2021 DE 102021202966
(43) Veröffentlichungstag der Anmeldung: 07.02.2024
(73) Patentinhaber: Continental Reifen Deutschland GmbH, 30175 Hannover (DE)
(72) Erfinder: BEHR, Ulrich, 30165 Hannover (DE)
(74) Vertreter: Continental Corporation
(86) Internationale Anmeldenummer: PCT/DE2021/200221
(87) Internationale Veröffentlichungsnummer: WO 2022/199731

(56) Entgegenhaltungen:
- EP-A1- 3 178 669
- WO-A1-2013/148355
- DE-A1- 102007 016 930
- DE-A1- 102019 207 519

## Beschreibung

Die Erfindung betrifft einen Fahrzeugluftreifen mit einem Laufstreifen mit zumindest einer zwei Profilrippen voneinander trennenden Umfangsrille mit einem Rillengrund und an den Profilrippen ausgebildeten Rillenflanken, wobei am Rillengrund eine Vielzahl von jeweils bis zu beiden Rillenflanken reichenden Stabilisierungselementen ausgebildet ist.

Ein derartiger Fahrzugluftreifen ist beispielsweise aus der US 10 639 941 B2 bekannt. Der Fahrzeugluftreifen weist einen Laufstreifen mit drei Umfangsrillen auf, welche zwei schulterseitige Profilrippen und zwei mittlere Profilrippen voneinander trennen. In einer der schulterseitigen Umfangsrillen ist eine Vielzahl von über den Umfang verteilten quaderförmigen Stabilisierungselementen ausgebildet, welche an die Rillenflanken angebunden sind und daher die schulterseitige Profilrippe mit der benachbarten mittleren Profilrippe verbinden. Die Stabilisierungselemente weisen in radialer Richtung eine Höhe von 40 % bis 60 % der Profiltiefe auf und sind in radialer Richtung durch eine U-förmig gekrümmte Deckfläche begrenzt.

Aus der DE 10 2007 016 930 A1 ist ein Fahrzeugluftreifen, insbesondere ein Nutzfahrzeugreifen, mit einem Laufstreifen bekannt, welcher Profilrippen und diese trennende, in Draufsicht gerade verlaufende Umfangsrillen aufweist. An den Rillenflanken sind Vorsprünge ausgebildet, welche der Umfangsrille einen wellenoder zick-zack-förmig verlaufenden Rillengrundpfad verleihen und welche Teile oder Abschnitte spitzer Körper sind, wobei die radial äußeren Spitzen der Vorsprünge der Laufstreifenperipherie zugewandt sind. Die Vorsprünge sorgen für ein Abstoßen von Fremdkörpern, insbesondere von kleinen Steinen, und sind für die Profilhaltbarkeit sowie das Abrollgeräusch günstig.

Die EP 3 178 669 A1 offenbart einen Fahrzeugluftreifen mit einem Laufstreifen mit Profilblöcken, welche von V-förmig über die Laufstreifenbreite verlaufenden Schrägrillen und zwischen diesen verlaufenden, weiteren Rillen begrenzt sind. In den Schrägrillen befinden sich jeweils an einer Blockflanke angebundene, in Draufsicht trapezförmige Vorsprünge mit jeweils drei zur radialen Richtung geneigt verlaufenden Begrenzungsflächen. Die Vorsprünge wirken als Steinauswerfer.

Aus der WO 2013/148355 A1 ist ein vorvulkanisierter Laufstreifen zur Runderneuerung bekannt, welcher Umfangsrillen mit bis zu den Rillenflanken reichenden, quaderförmigen Stabilisierungselementen aufweist.

Die DE 10 2019 207 519 A1 offenbart einen Fahrzeugluftreifen mit einem Laufstreifen mit einer schulterseitigen Profilrippe, welche von einer Umfangsrille begrenzt ist. Der Rillengrund der Umfangsrille ist aus drei im Querschnitt kreisbogenförmig verlaufenden Abschnitten mit unterschiedlichen Krümmungsradien zusammengesetzt, wobei am Rillengrund an beide Rillenflanken angebundene, als Abriebindikatoren dienende Erhebungen ausgebildet sind. Jede Erhebung setzt sich aus einem Indikatorteil mit einer auf der Höhe der Mindestprofiltiefe befindlichen Indikatorfläche und zwei vom Niveau der Indikatorfläche in Richtung Rillengrund abfallenden, rampenförmigen Seitenteilen zusammen. Die Umfangsrille soll im Bereich der Erhebungen eine gute Rissbeständigkeit aufweisen.

In Umfangsrillen ausgebildete Stabilisierungselemente stützen die Profilrippen gegen axial gerichtete Kräfte gegeneinander ab, wodurch die Quersteifigkeit des Laufstreifens erhöht wird. Beim Abrollen des Reifens wirken auf die Stabilisierungselemente hohe Kerbkräfte, insbesondere wenn sich die Stabilisierungselemente in schulterseitigen Umfangrillen befinden, in welchen besonders hohe Quer- und Längskräfte auftreten. Durch die Kerbkräfte besteht die Gefahr, dass an den Stabilisierungselementen bzw. den angrenzenden Bereichen des Rillengrundes und der Rillenflanken Risse im Gummimaterial des Laufstreifens auftreten. Da in herkömmlicher Weise ausgeführte Stabilisierungselemente außerdem den Rillenquerschnitt verringern, sind ferner deren Auswirkungen auf das Wasserdrainagevermögen zu berücksichtigen. Die bisher bekannten Stabilisierungselemente sind in dieser Hinsicht weiter verbesserungsbedürftig.

Der Erfindung liegt daher die Aufgabe zugrunde, bei einem Fahrzeugluftreifen der eingangs genannten Art sowohl unter Bedachtnahme auf das Wasserdrainagevermögen als auch unter Aufrechterhaltung einer guten Stabilisierungswirkung der Stabilisierungselemente die Rissbeständigkeit des Laufstreifens im Bereich der Stabilisierungselemente zu erhöhen.

Gelöst wird die gestellte Aufgabe erfindungsgemäß dadurch, dass sich die Stabilisierungselemente jeweils aus einer am Rillengrund aufsitzenden, an beide Rillenflanken angebundenen, Grundanhebung mit einer Deckfläche, welche in einer in radialer Richtung gegenüber dem Niveau der Profiltiefe ermittelten konstanten Höhe von 1,0 mm bis 2,0 mm verläuft, und einem auf der Grundanhebung befindlichen, ausschließlich an der einen Rillenflanke angebundenen pyramidenförmigen Vorsprung mit einer an dieser Rillenflanke liegenden radial äußeren Spitze zusammensetzen.

Da ausschließlich eine niedrige Grundanhebung, nicht jedoch der Vorsprung, unmittelbar am Rillengrund aufsitzt und an beide Rillenflanken angebunden ist, bleibt ein für das Wasserdrainagevermögen vorteilhaft großer Rillenquerschnitt im Bereich der Stabilisierungselemente erhalten. Die Grundanhebung gewährleistet gemeinsam mit dem Vorsprung eine gute gegenseitige Stabilisierung der Profilrippen. Das Auftreten von Kerbspannungen im Bereich des Vorsprunges, insbesondere am Übergang des Vorsprunges zu den Rillenflanken, wird vermieden bzw. weitgehend vermieden, sodass ferner für eine hohe Rissbeständigkeit der Stabilisierungselemente gesorgt ist. Der zwischen dem Wasserdrainagevermögen, der Stabilisierungswirkung der Stabilisierungselemente und der Rissbeständigkeit bestehende Zielkonflikt ist somit in besonders vorteilhafter Weise gelöst.

Gemäß einer bevorzugten Ausführung ist der pyramidenförmige Vorsprung durch zwei dreieckige Seitenflächen begrenzt, welche an einer zur radial äußeren Spitze verlaufenden Begrenzungskante aneinander anschließen, wobei zwischen dem radial inneren Ende der Begrenzungskante und der dieser gegenüberliegenden Rillenflanke ein in axialer Richtung sowie parallel zur Laufstreifenperipherie ermittelter Abstand von zumindest 20 % der an der Laufstreifenperipherie in axialer Richtung ermittelten Breite der Umfangsrille verbleibt. Diese Maßnahme ist für das Wasserdrainagevermögen de Umfangsrille von Vorteil.

Bei dieser Ausgestaltung wird ein besonders vorteilhafter Kompromiss zwischen der Stabilisierungswirkung der Stabilisierungselemente und dem Wasserdrainagevermögen erzielt, wenn der Abstand zwischen dem radial inneren Ende der Begrenzungskante und der dieser gegenüberliegenden Rillenflanke 25% bis 40 %, insbesondere 30 % bis 35 %, der Breite der Umfangsrille beträgt.

Gemäß einer weiteren bevorzugten Ausführung liegt die radial äußere Spitze des Vorsprunges an der Laufstreifenperipherie. Gemäß einer alternativen bevorzugten Ausführung weist die radial äußere Spitze des Vorsprunges zur Laufstreifenperipherie einen in radialer Richtung ermittelten Abstand von höchstens 2,0 mm, insbesondere von höchstens 1,0 mm, auf. Ein derartiger Vorsprung ist in seiner Stabilisierungswirkung weiter verbessert.

Ferner ist es günstig, wenn jede Seitenfläche des Vorsprunges eine, insbesondere in einer in radialer Richtung ermittelten konstanten Tiefe verlaufende, radial innere Begrenzungskante aufweist, welche, in Draufsicht betrachtet, zur Umfangsrichtung unter einem Winkel von 15° bis 25°, vorzugsweise von 17° bis 22°, verläuft. Durch derart gestaltete Seitenflächen lässt sich die Gefahr des Auftretens von Kerbspannungen im Bereich des Vorsprunges weiter reduzieren, was für die Rissbeständigkeit von Vorteil ist. Ferner wird ein solcher Vorsprung beim Fahren auf nasser Fahrbahn auf äußerst verwirbelungsarme bzw. im Wesentlichen verwirbelungsfreie Weise von Wasser umströmt, wodurch das Wasserdrainageverhalten weiter verbessert ist.

Die Rissbeständigkeit des Laufstreifens im Bereich der Stabilisierungselemente ist weiter verbessert, wenn jede Seitenfläche des Vorsprunges eine an der Rillenflanke verlaufende Begrenzungskante aufweist, welche zur radialen Richtung unter einen Winkel von 25° bis 35° verläuft.

Gemäß einer weiteren bevorzugten Ausführung weisen die Stabilisierungselemente eine Symmetrieebene auf, welche in radialer Richtung sowie in Draufsicht in axialer Richtung verläuft. Dies sorgt insbesondere für eine besonders gleichmäßige Stabilisierungswirkung.

Eine weitere bevorzugte Ausführung ist dadurch gekennzeichnet, dass Stabilisierungselemente vorgesehen sind, welche als Paare ausgebildet sind, wobei zu einem Paar von Stabilisierungselementen gehörenden Vorsprünge an derselben Rillenflanke angebunden sind. Das paarweise Ausbilden der Stabilisierungselemente gestattet es, die Stabilisierungswirkung auf die üblicherweise über den Laufstreifenumfang nicht konstante Steifigkeit der jeweiligen Profilpositivstrukturen abzustimmen. Da die zu einem Paar gehörenden Vorsprünge an derselben Rillenflanke angebunden sind, bleibt ein vorteilhaft hohes Wasserdrainagevermögen in der Umfangsrille erhalten.

In diesem Zusammenhang ist es von Vorteil, wenn die zu einem Paar gehörenden Stabilisierungselemente - bezogen auf die Symmetrieebenen - voneinander einen in Umfangsrichtung ermittelten gegenseitigen Abstand von 5,0 mm bis 10,0 mm aufweisen.

Ferner ist es in diesem Zusammenhang von Vorteil, wenn in Umfangsrichtung aufeinanderfolgende Paare - bezogen auf die Symmetrieebenen von benachbarten Stabilisierungselementen aus verschiedenen Paaren - voneinander einen in Umfangsrichtung ermittelten gegenseitigen Abstand aufweisen, welcher 150 % bis 220 %, bevorzugt 170 % bis 210 %, des gegenseitigen Abstand, welchen die zu einem Paar gehörenden Vorsprünge voneinander aufweisen, beträgt.

Eine weitere bevorzugte Ausführung ist dadurch gekennzeichnet,
a) dass zwischen den zu einem Paar gehörenden Stabilisierungselementen eine Querrille aus einer der Profilrippen in die Umfangsrille einmündet oder
b) dass zwischen den zu einem Paar gehörenden Stabilisierungselementen jeweils eine Querrille aus jeder Profilrippe in die Umfangsrille einmündet.

Die Stabilisierungselemente eines Paares befinden sich daher bei den an den Querrillen liegenden Randbereichen (Endabschnitten) der durch die Querrillen gebildeten Rippenelemente der Profilrippe. Genau an diesen Stellen sind die Stabilisierungselemente besonders vorteilhaft, weil sie der durch die Querrillen verursachten Abnahme der Profilsteifigkeit der Profilrippe besonders deutlich entgegenwirken.

Gemäß einer bevorzugten Ausführung sind die Stabilisierungselemente zumindest in einer schulterseitigen Umfangsrille ausgebildet.

Bei dieser Ausführung ist es von Vorteil, wenn die pyramidenförmigen Vorsprünge der Stabilisierungselemente an der laufstreifenaußenseitigen Rillenflanke der schulterseitigen Umfangsrille angebunden sind.

Eine weitere bevorzugte Ausführung ist dadurch gekennzeichnet, dass in der ersten Profilrippe, welche vorzugsweise eine schulterseitige Profilrippe ist, in die Umfangsrille einmündende Querrillen verlaufen, welche die erste Profilrippe in Rippenelemente mit jeweils einer Umfangslänge von 45,0 mm bis 70,0 mm, insbesondere von 50,0 mm bis 60,0 mm, gliedern und
dass die zweite Profilrippe von Querrillen einer ersten Art und von gegenüber diesen vorzugsweise schmäler ausgeführten Querrillen einer zweiten Art durchquert sind,
wobei die Querrillen erster Art der zweiten Profilrippe Rippenelemente verleihen, welche den Rippenelementen der ersten Profilrippe zugeordnet sind, und wobei die Querrillen zweiter Art den Rippenelementen Rippenblöcke verleihen,
wobei als Paare ausgebildete Stabilisierungselemente vorgesehen sind, zwischen welchen eine Querrille erster Art oder eine Querrille zweiter Art einmündet.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen schulterseitigen Umfangsabschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2 und
Fig. 5 eine Ansicht gemäß der durch den Pfeil S₅ in Fig. 2 angedeuteten Sichtrichtung.

Gemäß der Erfindung ausgeführte Fahrzeugluftreifen sind Reifen für mehrspurige Kraftfahrzeuge sowie vorzugsweise Reifen in Radialbauart für Personenkraftwagen, Vans oder Light-Trucks.

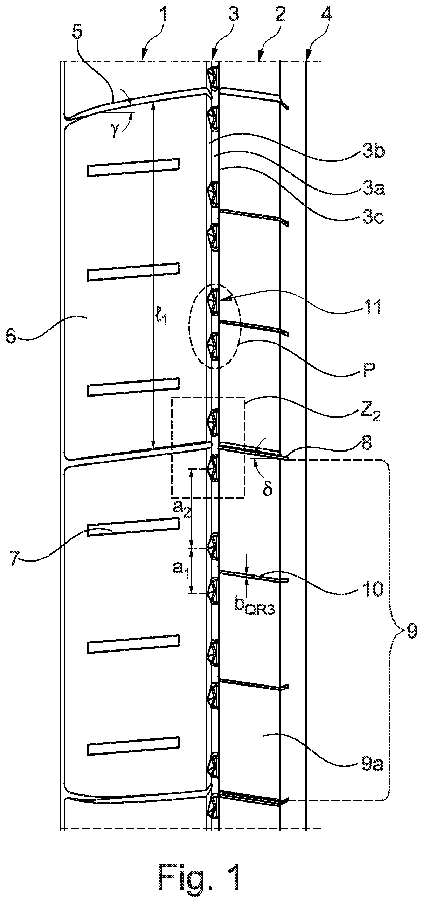

Fig. 1 zeigt eine Draufsicht auf einen schulterseitigen Umfangsabschnitt eines Laufstreifens mit einer schulterseitigen Profilrippe 1, einer mittleren Profilrippe 2, einer die schulterseitige Profilrippe 1 von der mittleren Profilrippe 2 trennenden, in Draufsicht gerade verlaufenden schulterseitigen Umfangsrille 3 und einer lediglich angedeuteten mittleren Umfangsrille 4, welche die mittlere Profilrippe 2 zu weiteren, beispielsweise in bekannter Weise ausgeführten Profilstrukturen des Laufstreifens begrenzt.

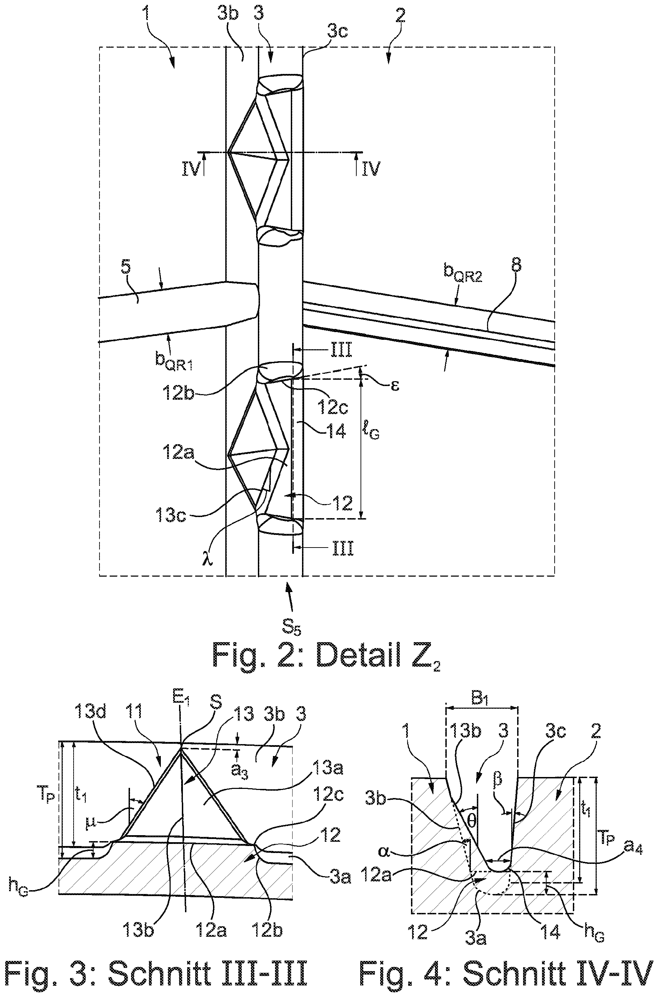

Die schulterseitige Umfangsrille 3 ist in radialer Richtung auf die jeweils vorgesehene Profiltiefe T_{P} (Fig. 4) ausgeführt, welche für den bevorzugten Reifentyp üblicherweise 4,0 mm bis 13,0 mm, insbesondere mindestens 6,5 mm, beträgt, weist an der Laufstreifenperipherie eine in axialer Richtung ermittelte Breite B₁ (Fig. 4) von beispielsweise 6,0 mm bis 13,0 mm auf und ist durch einen Rillengrund 3a (vergl. Fig. 3 bis Fig. 5), eine an der schulterseitigen Profilrippe 1 ausgebildete laufstreifenaußenseitige Rillenflanke 3b (vergl. Fig. 2, Fig. 4) sowie eine an der mittleren Profilrippe 2 ausgebildete laufstreifeninnenseitige Rillenflanke 3c (vergl. Fig. 2, Fig. 4) begrenzt. Gemäß Fig. 4 ist der Rillengrund 3a, im in axialer Richtung ausgerichteten Querschnitt betrachtet (vergl. Lage der Schnittlinie **IV-IV** in Fig. 2), U-förmig ausgeführt. Die laufstreifenaußenseitige Rillenflanke 3b verläuft, im in axialer Richtung ausgerichteten Querschnitt betrachtet, zur radialen Richtung unter einem Winkel α von 10° bis 20°, insbesondere von 13° bis 17°, und die laufstreifeninnenseitige Rillenflanke 3c verläuft, im in axialer Richtung ausgerichteten Querschnitt betrachtet, zur radialen Richtung unter einem Winkel β von 1° bis 10°, insbesondere 3° bis 7°, wobei die Rillenflanken 3b, 3c in einer in radialer Richtung ermittelten Tiefe t₁ von 75% bis 90% der Profiltiefe T_{P} an den Rillengrund 3a anschließen.

Wie Fig. 1 ferner zeigt, ist die schulterseitige Profilrippe 1 mit in Draufsicht gerade sowie parallel zueinander verlaufenden einschnittartig schmalen Querrillen 5 versehen, welche die schulterseitige Profilrippe 1 in axialer Richtung durchqueren, zur axialen Richtung unter einem Winkel γ von 0° bis 15°, insbesondere von 3° bis 12°, verlaufen, an der Laufstreifenperipherie eine senkrecht zur ihrer Erstreckungsrichtung ermittelte Breite b_{QR1} (Fig. 2) von 2,0 mm bis 4,0 mm aufweisen und der schulterseitigen Profilrippe 1 in Umfangsrichtung langgestreckte Rippenelemente 6 verleihen. Jedes Rippenelement 6 weist eine Umfangslänge I₁ von 45,0 mm bis 70,0 mm, insbesondere von 50,0 mm bis 60,0 mm, auf und ist mit drei in Draufsicht parallel zu den Querrillen 5 verlaufenden Querrillen 7 versehen, welche zumindest im Wesentlichen gleichmäßig über die Umfangslänge I₁ verteilt sind, innerhalb des Rippenelementes 6 enden und breiter ausgeführt sind als die Querrillen 5.

Die mittlere Profilrippe 2 ist von weiteren einschnittartig schmalen Querrillen 8 durchquert, welche in Draufsicht betrachtet gerade, parallel zueinander sowie zur axialen Richtung unter einem Winkel δ von 0° bis 15°, insbesondere von 3° bis 12°, verlaufen, beim gezeigten Ausführungsbeispiel zu den Querrillen 5 der schulterseitigen Profilrippe 1 bezüglich der axialen Richtung gegensinnig geeinigt sind, an der Laufstreifenperipherie eine senkrecht zur ihrer Erstreckungsrichtung ermittelte Breite b_{QR2} (Fig. 2) von 2,0 mm bis 4,0 mm aufweisen und der mittleren Profilrippe 2 in Umfangsrichtung langgestreckte Rippenelemente 9 verleihen. Die Position der Querrillen 8 ist derart, dass diese gegenüberliegend zu den in der schulterseitigen Profilrippe 1 verlaufenden Querrillen 5 in die schulterseitige Umfangsrille 3 einmünden, sodass jedes Rippenelement 9 der mittleren Profilrippe 2 einem Rippenelement 6 der schulterseitigen Profilrippe 1 zugeordnet ist.

Jedes Rippenelement 9 ist von zwei zusätzlichen einschnittartig schmalen Querrillen 10 durchquert, die, in Draufsicht, parallel zu den Querrillen 8 verlaufen, an der Laufstreifenperipherie eine senkrecht zur ihrer Erstreckungsrichtung ermittelte Breite b_{QR3} von 1,0 mm bis 2,5 mm aufweisen und dem Rippenelement 9 Rippenblöcke 9a verleihen.

Die Querrillen 5, 7, 8, 10 weisen in radialer Richtung vorzugsweise eine Tiefe von 50% bis 95% der Profiltiefe T_{P} (Fig. 3, Fig. 4) auf.

Wie Fig. 1 zeigt, ist in der schulterseitigen Umfangsrille 3 eine Vielzahl von Stabilisierungselementen 11 ausgebildet, welche in Paaren P angeordnet sind. Die jeweils zu einem Paar P gehörenden Stabilisierungselemente 11 sind jeweils zwei in Umfangsrichtung aufeinanderfolgenden Rippenblöcken 9a zugeordnet, sodass zwischen den zu einem Paar P gehörenden Stabilisierungselementen 11 jeweils eine Querrille 8 bzw. eine Querrille 10 einmündet. Beim gezeigten Ausführungsbeispiel ist bei jeder Querrille 8 und bei jeder Querrille 10 ein Paar P von Stabilisierungselementen 11 ausgebildet.

Gemäß Fig. 3 weist jedes Stabilisierungselement 11 eine Symmetrieebene E₁ auf, welche in radialer Richtung sowie, in Draufsicht betrachtet, in axialer Richtung (in den Figuren nicht zu sehen) verläuft. Wie Fig. 1 zeigt, weisen die zu einem Paar P gehörenden Stabilisierungselemente 11 - bezogen auf die Symmetrieebenen E₁ (Fig. 3) - in Umfangsrichtung ermittelte gegenseitige Abstände a₁ von 5,0 mm bis 10,0 mm auf. In Umfangsrichtung aufeinanderfolgende Paare P weisen - bezogen auf die Symmetrieebenen E₁ (Fig. 3) von benachbarten Stabilisierungselementen 11 aus verschiedenen Paaren P - voneinander gegenseitige Abstände a₂ auf, welche größer sind als die Abstände a₁ und insbesondere 150% bis 220%, bevorzugt 170% bis 210%, der Abstände a₁ betragen.

Die weitere Ausgestaltung der Stabilisierungselemente 11 wird nachfolgend anhand eines einzelnen Stabilisierungselementes 11 erläutert.

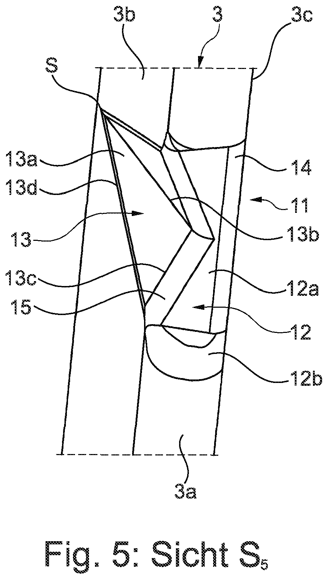

Gemäß Fig. 5 setzt sich das Stabilisierungselement 11 aus einer am Rillengrund 3a aufsitzenden, an beide Rillenflanken 3b, 3c angebundenen, plattenförmigen Grundanhebung 12 und einem auf dieser befindlichen, an die laufstreifenaußenseitige Rillenflanke 3b angebundenen, pyramidenförmigen Vorsprung 13 zusammen. Gemäß Fig. 3 und Fig. 5 ist die Grundanhebung 12 in radialer Richtung durch eine parallel zur Laufstreifenperipherie ausgerichtete Deckfläche 12a und in den Umfangsrichtungen durch zwei Stirnflächen 12b begrenzt. Wie Fig. 3 und Fig. 4 zeigen, verläuft die Deckfläche 12a in einer in radialer Richtung gegenüber dem Niveau der Profiltiefe T_{P} ermittelten Höhe h_{G} von 1,0 mm bis 2,0 mm, wobei sich das Niveau der Höhe h_{G} bevorzugt radial außerhalb des Niveaus der Tiefe t₁ befindet, sodass die Deckfläche 12a radial außerhalb des Rillengrundes 3a verläuft. Die Stirnflächen 12b verlaufen, im in Umfangsrichtung ausgerichteten Querschnitt betrachtet, gerundet und gehen knickfrei in den Rillengrund 3a über (Fig. 3). Am gegenseitigen Anschlussbereich jeder Stirnfläche 12b zur Deckfläche 12a ist eine Kante 12c (Fig. 2, Fig. 3) ausgebildet, welche in Draufsicht betrachtet zur axialen Richtung unter einem Winkel ε (Fig. 2) von 0° bis 10° verläuft. Die Grundanhebung 12 weist am Niveau der Deckfläche 12a, also in der Höhe h_{G}, an ihrer längsten Stelle eine Umfangslänge I_{G} (Fig. 2) von 5,0 mm bis 10,0 mm, insbesondere von 7,0 mm bis 9,0 mm, auf. Beim gezeigten Ausführungsbeispiel ist zwischen der Deckfläche 12a und der laufstreifeninnenseitigen Rillenflanke 3c eine Übergangsrundung 14 (Fig. 4, Fig. 5) ausgebildet.

Gemäß Fig. 3 weist der pyramidenförmige Vorsprung 13 eine in der Symmetrieebene E₁ befindliche, an der laufstreifenaußenseitigen Rillenflanke 3b liegende, radial äußere Spitze S auf und ist durch zwei dreieckige Seitenflächen 13a begrenzt. Die Spitze S weist zur Laufstreifenperipherie einen in der Symmetrieebene E₁ in radialer Richtung ermittelten Abstand a₃ von höchstens 2,0 mm, insbesondere von höchstens 1,0 mm, auf. Alternativ kann die Spitze S an der Laufstreifenperipherie liegen. Gemäß Fig. 5 weisen die Seitenflächen 13a jeweils eine radial innere Begrenzungskante 13c, eine an der laufstreifenaußenseitigen Rillenflanke 3b verlaufende Begrenzungskante 13d und eine in der Symmetrieebene E₁ verlaufende gemeinsame Begrenzungskante 13b (Fig. 3) auf. Die radial innere Begrenzungskante 13c verläuft in einer in radialer Richtung ermittelten konstanten Tiefe sowie zur Umfangsrichtung unter einem Winkel λ (Fig. 2) von 15° bis 25°. Die an der laufstreifenaußenseitigen Rillenflanke 3b verlaufende Begrenzungskante 13d ist zur radialen Richtung unter einem Winkel µ (Fig. 3) von 25° bis 40°, insbesondere von 30° bis 35°, geneigt. Die gemeinsame Begrenzungskante 13b verläuft zur radialen Richtung unter einem Winkel θ (Fig. 4) von 15° bis 35°, insbesondere von 20° bis 30°. Gemäß Fig. 4 verbleibt zwischen dem radial inneren Ende der Begrenzungskante 13b und der laufstreifeninnenseitigen Rillenflanke 3c ein in axialer Richtung sowie parallel zur Laufstreifenperipherie ermittelter Abstand a₄ von zumindest 20% der Breite B₁ der schulterseitigen Umfangsrille 3. Bevorzugter Weise beträgt der Abstand a₄ 25% bis 40%, insbesondere 30% bis 35%, der Breite B₁ der schulterseitigen Umfangsrille 3. Der pyramidenförmige Vorsprung 13 reicht an der laufstreifenaußenseitigen Rillenflanke 3b bis zu den Enden der Deckfläche 12a, sodass die Deckfläche 12a die laufstreifenaußenseitige Rillenflanke 3b nicht kontaktiert (Fig. 5).

Gemäß Fig. 5 ist beim gezeigten Ausführungsbeispiel am radial inneren Endbereich des Vorsprunges 13 zwischen jeder dreieckigen Seitenflächen 13a und der Deckfläche 12a der Grundanhebung 12 eine Übergangsrundung 15 ausgebildet.

Die Erfindung ist auf das beschriebene Ausführungsbeispiel nicht beschränkt.

Insbesondere können die Stabilisierungselemente auch vereinzelt, also nicht paarweise, sowie in mittleren Umfangsrillen ausgebildet sind. Ferner können die innerhalb einer Umfangsrille befindlichen Vorsprünge an verschiedenen Rillenflanken angebunden sein.

### Bezugszeichenliste

- 1: schulterseitige Profilrippe
- 2: mittlere Profilrippe
- 3: schulterseitige Umfangsrille
- 3a: Rillengrund
- 3b: laufstreifenaußenseitige Rillenflanke
- 3c: laufstreifeninnenseitige Rillenflanke
- 4: mittlere Umfangsrille
- 5: einschnittartige Querrille
- 6: Rippenelement
- 7: Querrille
- 8: einschnittartige Querrille
- 9: Rippenelement
- 9a: Rippenblock
- 10: einschnittartige Querrille
- 11: Stabilisierungselement
- 12: Grundanhebung
- 12a: Deckfläche
- 12b: Stirnfläche
- 12c: Kante
- 13: Vorsprung
- 13a: Seitenfläche
- 13b: Begrenzungskante
- 13c: Begrenzungskante
- 13d: Begrenzungskante
- 14: Übergangsrundung
- 15: Übergangsrundung
- a₁, a₂, a₃, a₄: Abstand
- B₁b_{QR1}, b_{QR2}, b_{QR3}: Breite
- E₁: Symmetrieebene
- h_{G}: Höhe
- I₁, I_{G}: Umfangslänge
- P: Paar
- S: radial äußere Spitze
- S₅: Pfeil (Sichtrichtung)
- t₁: Tiefe
- T_{P}: Profiltiefe
- Z₂: Detail
- α, β, γ, δ, ε, θ, λ, µ: Winkel

## Patentansprüche

1. Fahrzeugluftreifen mit einem Laufstreifen mit zumindest einer zwei Profilrippen (1, 2) voneinander trennenden Umfangsrille (3) mit einem Rillengrund (3a) und an den Profilrippen (1, 2) ausgebildeten Rillenflanken (3b, 3c), wobei am Rillengrund (3a) eine Vielzahl von jeweils bis zu beiden Rillenflanken (3b, 3c) reichenden Stabilisierungselementen (11) ausgebildet ist,
**dadurch gekenzeichnet,**
dass sich die Stabilisierungselemente (11) jeweils aus einer am Rillengrund (3a) aufsitzenden, an beide Rillenflanken (3b, 3c) angebundenen,
Grundanhebung (12) mit einer Deckfläche (12a), welche in einer in radialer Richtung gegenüber dem Niveau der Profiltiefe (T_{P}) ermittelten konstanten Höhe (h_{G}) von 1,0 mm bis 2,0 mm verläuft, und einem auf der Grundanhebung (12) befindlichen, ausschließlich an der einen Rillenflanke (3b) angebundenen pyramidenförmigen Vorsprung (13) mit einer an dieser Rillenflanke (3b) liegenden radial äußeren Spitze (S) zusammensetzt.

2. Fahrzeugluftreifen nach Anspruch 1, **dadurch gekenzeichnet**, dass der pyramidenförmige Vorsprung (13) durch zwei dreieckige Seitenflächen (13a) begrenzt ist, welche an einer zur radial äußeren Spitze (S) verlaufenden Begrenzungskante (13b) aneinander anschließen, wobei zwischen dem radial inneren Ende der Begrenzungskante (13b) und der dieser gegenüberliegenden Rillenflanke (3c) ein in axialer Richtung sowie parallel zur Laufstreifenperipherie ermittelter Abstand (a₄) von zumindest 20% der an der Laufstreifenperipherie in axialer Richtung ermittelten Breite (B₁) der Umfangsrille (3) verbleibt.

3. Fahrzeugluftreifen nach Anspruch 2, **dadurch gekenzeichnet**, dass der Abstand (a₄) zwischen dem radial inneren Ende der Begrenzungskante (13b) und der dieser gegenüberliegenden Rillenflanke (3c) 25% bis 40%, insbesondere 30% bis 35%, der Breite (B₁) der Umfangsrille (3) beträgt.

4. Fahrzeugluftreifen nach einem der Ansprüche 1 bis 3,
**dadurch gekenzeichnet**, dass die radial äußere Spitze (S) des Vorsprunges (13) an der Laufstreifenperipherie liegt.

5. Fahrzeugluftreifen nach einem der Ansprüche 1 bis 3,
**dadurch gekenzeichnet**, dass die radial äußere Spitze (S) des Vorsprunges (13) zur Laufstreifenperipherie einen in radialer Richtung ermittelten Abstand (a₃) von höchstens 2,0 mm, insbesondere von höchstens 1,0 mm, aufweist.

6. Fahrzeugluftreifen nach einem der Ansprüche 2 bis 5,
**dadurch gekenzeichnet**, dass jede Seitenfläche (13a) des Vorsprunges (13) eine, insbesondere in einer in radialer Richtung ermittelten konstanten Tiefe verlaufende, radial innere Begrenzungskante (13c) aufweist, welche, in Draufsicht betrachtet, zur Umfangsrichtung unter einem Winkel (λ) von 15° bis 25°, vorzugsweise von 17° bis 22°, verläuft.

7. Fahrzeugluftreifen nach einem der Ansprüche 2 bis 6,
**dadurch gekenzeichnet**, dass jede Seitenfläche (13a) des Vorsprunges (13) eine an der Rillenflanke (3b) verlaufende Begrenzungskante (13d) aufweist, welche zur radialen Richtung unter einen Winkel (µ) von 25° bis 35° verläuft.

8. Fahrzeugluftreifen nach einem der Ansprüche 1 bis 7,
**dadurch gekenzeichnet**, dass die Stabilisierungselemente (11) eine Symmetrieebene (E₁) aufweisen, welche in radialer Richtung sowie in Draufsicht in axialer Richtung verläuft.

9. Fahrzeugluftreifen nach einem der Ansprüche 1 bis 8,
**dadurch gekenzeichnet**, dass Stabilisierungselemente (11) vorgesehen sind, welche als Paare (P) ausgebildet sind, wobei zu einem Paar (P) von Stabilisierungselementen (11) gehörende Vorsprünge (13) an derselben Rillenflanke (3b) angebunden sind.

10. Fahrzeugluftreifen nach Anspruch 8 und 9,
**dadurch gekenzeichnet**, dass die zu einem Paar (P) gehörenden Stabilisierungselemente (11) - bezogen auf die Symmetrieebenen (E₁) - voneinander einen in Umfangsrichtung ermittelten gegenseitigen Abstand (a₁) von 5,0 mm bis 10,0 mm aufweisen.

11. Fahrzeugluftreifen nach Anspruch 10, **dadurch gekenzeichnet**, dass in Umfangsrichtung aufeinanderfolgende Paare (P) - bezogen auf die Symmetrieebenen (E₁) von benachbarten Stabilisierungselementen (11) aus verschiedenen Paaren (P) - voneinander einen in Umfangsrichtung ermittelten gegenseitigen Abstand (a₂) aufweisen, welcher 150% bis 220%, bevorzugt 170% bis 210%, des gegenseitigen Abstand (a₁), welchen die zu einem Paar (P) gehörenden Vorsprünge (13) voneinander aufweisen, beträgt.

12. Fahrzeugluftreifen nach einem der Ansprüche 9 bis 11,
**dadurch gekenzeichnet,**
dass zwischen den zu einem Paar (P) gehörenden Stabilisierungselementen (11) eine Querrille (5, 8, 10) aus einer der Profilrippen (1, 2) in die Umfangsrille (3) einmündet oder
dass zwischen den zu einem Paar (P) gehörenden Stabilisierungselementen (11) jeweils eine Querrille (5, 8, 10) aus jeder Profilrippe (1, 2) in die Umfangsrille (3) einmündet.

13. Fahrzeugluftreifen nach einem der Ansprüche 1 bis 12,
**dadurch gekenzeichnet**, dass die Stabilisierungselemente (11) zumindest in einer schulterseitigen Umfangsrille (3) ausgebildet sind.

14. Fahrzeugluftreifen nach Anspruch 13, **dadurch gekenzeichnet**, dass die pyramidenförmigen Vorsprünge (13) der Stabilisierungselemente (11) an der laufstreifenaußenseitigen Rillenflanke (3b) der schulterseitigen Umfangsrille (3) angebunden sind.

15. Fahrzeugluftreifen nach einem der Ansprüche 9 bis 14,
**dadurch gekenzeichnet**, dass in der ersten Profilrippe (1), welche vorzugsweise eine schulterseitige Profilrippe (1) ist, in die Umfangsrille (3) einmündende Querrillen (5) verlaufen, welche die erste Profilrippe (1) in Rippenelemente (6) mit jeweils einer Umfangslänge (I₁) von 45,0 mm bis 70,0 mm, insbesondere von 50,0 mm bis 60,0 mm, gliedern und
dass die zweite Profilrippe (2) von Querrillen (8) einer ersten Art und von gegenüber diesen vorzugsweise schmäler ausgeführten Querrillen (10) einer zweiten Art durchquert sind,
wobei die Querrillen (8) erster Art der zweiten Profilrippe (2) Rippenelemente (9) verleihen, welche den Rippenelementen (6) der ersten Profilrippe (1) zugeordnet sind, und wobei die Querrillen (10) zweiter Art den Rippenelementen (9) Rippenblöcke (9a) verleihen,
wobei als Paare (P) ausgebildete Stabilisierungselemente (11) vorgesehen sind, zwischen welchen eine Querrille (8) erster Art oder eine Querrille (10) zweiter Art einmündet.

## Claims

1. Pneumatic vehicle tyre with a tread having at least one circumferential channel (3) which separates two profile ribs (1, 2) from one another and which has a channel base (3a) and channel flanks (3b, 3c) formed on the profile ribs (1, 2), wherein, on the channel base (3a), there is formed a multiplicity of stabilizing elements (11) which extend in each case as far as both channel flanks (3b, 3c), **characterized**
**in that** the stabilizing elements (11) are made up in each case of a base elevation (12), which is seated on the channel base (3a) and which is connected to both channel flanks (3b, 3c) and which has a top surface (12a) which extends at a constant height (h_{G}), determined in a radial direction in relation to the level of the profile depth (T_{P}), of 1.0 mm to 2.0 mm, and of a pyramid-shaped projection (13), which is situated on the base elevation (12) and which is connected only to one channel flank (3b) and which has a radially outer tip (S) situated on said channel flank (3b).

2. Pneumatic vehicle tyre according to Claim 1, **characterized in that** the pyramid-shaped projection (13) is delimited by two triangular lateral faces (13a) which adjoin one another at a delimiting edge (13b) which extends to the radially outer tip (S), wherein, between the radially inner end of the delimiting edge (13b) and the channel flank (3c) situated opposite thereto, there remains a distance (a₄), determined in an axial direction and parallel to the tread periphery, of at least 20% of the width (B₁), determined in the axial direction at the tread periphery, of the circumferential channel (3).

3. Pneumatic vehicle tyre according to Claim 2, **characterized in that** the distance (a₄) between the radially inner end of the delimiting edge (13b) and the channel flank (3c) situated opposite thereto is 25% to 40%, in particular 30% to 35%, of the width (B₁) of the circumferential channel (3).

4. Pneumatic vehicle tyre according to one of Claims 1 to 3,
**characterized in that** the radially outer tip (S) of the projection (13) is situated on the tread periphery.

5. Pneumatic vehicle tyre according to one of Claims 1 to 3,
**characterized in that** the radially outer tip (S) of the projection (13) is at a distance (a₃), determined in the radial direction, of at most 2.0 mm, in particular of at most 1.0 mm, from the tread periphery.

6. Pneumatic vehicle tyre according to one of Claims 2 to 5,
**characterized in that** each lateral face (13a) of the projection (13) has a radially inner delimiting edge (13c) which, in particular, extends at a constant depth, determined in the radial direction, and which, when seen in plan view, extends at an angle (λ) of 15° to 25°, preferably of 17° to 22°, to the circumferential direction.

7. Pneumatic vehicle tyre according to one of Claims 2 to 6,
**characterized in that** each lateral face (13a) of the projection (13) has a delimiting edge (13d) which extends on the channel flank (3b) and which extends at an angle (µ) of 25° to 35° to the radial direction.

8. Pneumatic vehicle tyre according to one of Claims 1 to 7,
**characterized in that** the stabilizing elements (11) have a plane of symmetry (E₁) which extends in the radial direction and, in plan view, in the axial direction.

9. Pneumatic vehicle tyre according to one of Claims 1 to 8,
**characterized in that** stabilizing elements (11) designed as pairs (P) are provided, wherein projections (13) belonging to a pair (P) of stabilizing elements (11) are connected to the same channel flank (3b).

10. Pneumatic vehicle tyre according to Claims 8 and 9,
**characterized in that** the stabilizing elements (11) belonging to a pair (P) are - in relation to the planes of symmetry (E₁) - at a mutual distance (a₁), determined in the circumferential direction, of 5.0 mm to 10.0 mm from one another.

11. Pneumatic vehicle tyre according to Claim 10, **characterized in that** pairs (P) following one another in the circumferential direction are - in relation to the planes of symmetry (E₁) of adjacent stabilizing elements (11) from different pairs (P) - at a mutual distance (a₂), determined in the circumferential direction, from one another that is 150% to 220%, preferably 170% to 210%, of the mutual distance (a₁) at which the projections (13) belonging to a pair (P) are from one another.

12. Pneumatic vehicle tyre according to one of Claims 9 to 11,
**characterized**
**in that** a transverse channel (5, 8, 10) opens out from one of the profile ribs (1, 2) into the circumferential channel (3) between the stabilizing elements (11) belonging to a pair (P), or
**in that** in each case one transverse channel (5, 8, 10) opens out from each profile rib (1, 2) into the circumferential channel (3) between the stabilizing elements (11) belonging to a pair (P).

13. Pneumatic vehicle tyre according to one of Claims 1 to 12,
**characterized in that** the stabilizing elements (11) are formed at least in a shoulder-side circumferential channel (3).

14. Pneumatic vehicle tyre according to Claim 13, **characterized in that** the pyramid-shaped projections (13) of the stabilizing elements (11) are connected to the tread-outer-side channel flank (3b) of the shoulder-side circumferential channel (3).

15. Pneumatic vehicle tyre according to one of Claims 9 to 14,
**characterized in that**, in the first profile rib (1), which is preferably a shoulder-side profile rib (1), there extend transverse channels (5) which open out into the circumferential channel (3) and which divide the first profile rib (1) into rib elements (6) with in each case a circumferential length (I₁) of 45.0 mm to 70.0 mm, in particular of 50.0 mm to 60.0 mm, and
**in that** the second profile rib (2) is crossed by transverse channels (8) of a first type and by transverse channels (10) of a second type, which are preferably narrower in comparison with said transverse channels of the first type,
wherein the transverse channels (8) of the first type afford the second profile rib (2) rib elements (9) which are associated with the rib elements (6) of the first profile rib (1), and wherein the transverse channels (10) of the second type afford the rib elements (9) rib blocks (9a),
wherein stabilizing elements (11) designed as pairs (P) between which a transverse channel (8) of the first type or a transverse channel (10) of the second type opens out are provided.

## Revendications

1. Pneumatique de véhicule avec une bande de roulement avec au moins une rainure circonférentielle (3) séparant l'une de l'autre deux nervures de profil (1, 2) avec un fond de rainure (3a) et des flancs de rainure (3b, 3c) réalisés sur les nervures de profil (1, 2), une pluralité d'éléments de stabilisation (11) s'étendant respectivement jusqu'aux deux flancs de rainure (3b, 3c) étant réalisée sur le fond de rainure (3a),
**caractérisé en ce que**
les éléments de stabilisation (11) se composent respectivement d'un rehaussement de base (12) reposant sur le fond de rainure (3a), relié aux deux flancs de rainure (3b, 3c), avec une surface de recouvrement (12a) qui s'étend à une hauteur (h_{G}) constante, déterminée dans la direction radiale par rapport au niveau de la profondeur de profil (T_{P}), de 1,0 mm à 2,0 mm, et une saillie pyramidale (13) se trouvant sur le rehaussement de base (12), reliée exclusivement à l'un des flancs de rainure (3b), avec une pointe radialement extérieure (S) située sur ce flanc de rainure (3b).

2. Pneumatique de véhicule selon la revendication 1,**caractérisé en ce que** la saillie pyramidale (13) est délimitée par deux surfaces latérales triangulaires (13a) qui se rejoignent à un bord de délimitation (13b) s'étendant vers la pointe radialement extérieure (S), une distance (a₄), déterminée dans la direction axiale ainsi que parallèlement à la périphérie de la bande de roulement, d'au moins 20% de la largeur (B₁) de la rainure circonférentielle (3), déterminée dans la direction axiale à la périphérie de la bande de roulement, subsistant entre l'extrémité radialement intérieure du bord de délimitation (13b) et le flanc de rainure (3c) opposé à celle-ci.

3. Pneumatique de véhicule selon la revendication 2, **caractérisé en ce que** la distance (a₄) entre l'extrémité radialement intérieure du bord de délimitation (13b) et le flanc de rainure (3c) opposé à celui-ci représente 25 % à 40 %, notamment 30 % à 35 %, de la largeur (B₁) de la rainure circonférentielle (3).

4. Pneumatique de véhicule selon l'une quelconque des revendications 1 à 3, **caractérisé en ce que** la pointe radialement extérieure (S) de la saillie (13) est située à la périphérie de la bande de roulement.

5. Pneumatique de véhicule selon l'une quelconque des revendications 1 à 3, **caractérisé en ce que** la pointe radialement extérieure (S) de la saillie (13) présente, par rapport à la périphérie de la bande de roulement, une distance (a₃), déterminée dans la direction radiale, d'au plus 2,0 mm, notamment d'au plus 1,0 mm.

6. Pneumatique de véhicule selon l'une quelconque des revendications 2 à 5, **caractérisé en ce que** chaque surface latérale (13a) de la saillie (13) présente un bord de délimitation (13c) radialement intérieur, s'étendant notamment à une profondeur constante déterminée dans la direction radiale, qui, en vue de dessus, s'étend par rapport à la direction circonférentielle sous un angle (λ) de 15° à 25°, de préférence de 17° à 22°.

7. Pneumatique de véhicule selon l'une quelconque des revendications 2 à 6, **caractérisé en ce que** chaque surface latérale (13a) de la saillie (13) présente un bord de délimitation (13d) s'étendant sur le flanc de rainure (3b), qui s'étend par rapport à la direction radiale sous un angle (µ) de 25° à 35°.

8. Pneumatique de véhicule selon l'une quelconque des revendications 1 à 7, **caractérisé en ce que** les éléments de stabilisation (11) présentent un plan de symétrie (E₁) qui s'étend dans la direction radiale ainsi que dans la direction axiale en vue de dessus.

9. Pneumatique de véhicule selon l'une quelconque des revendications 1 à 8, **caractérisé en ce qu'**il est prévu des éléments de stabilisation (11) qui sont réalisés sous forme de paires (P), des saillies (13) appartenant à une paire (P) d'éléments de stabilisation (11) étant reliées au même flanc de rainure (3b).

10. Pneumatique de véhicule selon les revendications 8 et 9,
**caractérisé en ce que** les éléments de stabilisation (11) appartenant à une paire (P) - par rapport aux plans de symétrie (E₁) - présentent l'un par rapport à l'autre une distance mutuelle (a₁) déterminée dans la direction circonférentielle de 5,0 mm à 10,0 mm.

11. Pneumatique de véhicule selon la revendication 10, **caractérisé en ce que** des paires (P) successives dans la direction circonférentielle - par rapport aux plans de symétrie (E₁) d'éléments de stabilisation (11) voisins appartenant à des paires (P) différentes - présentent l'une par rapport à l'autre une distance mutuelle (a₂) déterminée dans la direction circonférentielle, qui représente 150 % à 220 %, de préférence 170 % à 210 %, de la distance mutuelle (a₁) que présentent l'une par rapport à l'autre les saillies (13) appartenant à une paire (P).

12. Pneumatique de véhicule selon l'une quelconque des revendications 9 à 11, **caractérisé en ce que**
entre les éléments de stabilisation (11) appartenant à une paire (P), une rainure transversale (5, 8, 10) de l'une des nervures de profil (1, 2) débouche dans la rainure circonférentielle (3) ou
entre les éléments de stabilisation (11) appartenant à une paire (P), une rainure transversale (5, 8, 10) de chaque nervure de profil (1, 2) débouche dans la rainure circonférentielle (3).

13. Pneumatique de véhicule selon l'une quelconque des revendications 1 à 12, **caractérisé en ce que** les éléments de stabilisation (11) sont réalisés au moins dans une rainure circonférentielle (3) côté épaulement.

14. Pneumatique de véhicule selon la revendication 13, **caractérisé en ce que** les saillies pyramidales (13) des éléments de stabilisation (11) sont reliées au flanc de rainure (3b) côté extérieur de la bande de roulement de la rainure circonférentielle (3) côté épaulement.

15. Pneumatique de véhicule selon l'une quelconque des revendications 9 à 14, **caractérisé en ce que** dans la première nervure de profil (1), qui est de préférence une nervure de profil (1) côté épaulement, s'étendent des rainures transversales (5) qui débouchent dans la rainure circonférentielle (3), qui divisent la première nervure de profil (1) en éléments de nervure (6) ayant chacun une longueur circonférentielle (I₁) de 45,0 mm à 70,0 mm, notamment de 50,0 mm à 60,0 mm, et **en ce que** la deuxième nervure de profil (2) est traversée par des rainures transversales (8) d'un premier type et par des rainures transversales (10) d'un deuxième type, de préférence plus étroites que celles-ci,
les rainures transversales (8) du premier type conférant à la deuxième nervure de profil (2) des éléments de nervure (9) qui sont associés aux éléments de nervure (6) de la première nervure de profil (1), et les rainures transversales (10) du deuxième type conférant aux éléments de nervure (9) des blocs de nervure (9a), des éléments de stabilisation (11) réalisés sous forme de paires (P) étant prévus, entre lesquels débouche une rainure transversale (8) du premier type ou une rainure transversale (10) du deuxième type.
